Europäisches Patentamt

European Patent Office

Office européen des brevets

(19)

(11) Publication number: **0 039 538**
**A1**

## (12) EUROPEAN PATENT APPLICATION

(21) Application number: **81301175.6**

(22) Date of filing: **19.03.81**

(51) Int. Cl.³: **A 01 N 33/04,** A 01 N 33/08,
A 01 N 37/02, A 01 N 37/06,
B 27 K 3/36, C 09 D 5/14

(30) Priority: **22.03.80 GB 8009778**

(43) Date of publication of application: **11.11.81**
**Bulletin 81/45**

(84) Designated Contracting States: **BE DE FR GB IT NL SE**

(71) Applicant: **BP Chemicals Limited, Britannic House Moor Lane, London, EC2Y 9BU (GB)**

(72) Inventor: **Kirby, Peter Roland, BP Chemicals Limited Saltend Hedon, Hull HU12 8DS (GB)**

(74) Representative: **Harry, John et al, BP INTERNATIONAL LIMITED Patents and Licensing Division Chertsey Road, Sunbury-on-Thames Middlesex TW16 7LN (GB)**

(54) **Metal amine carboxylates and use thereof as preservatives.**

(57) This case relates to compositions comprising metal amine carboxylates made by reacting a $C_1$ to $C_{20}$ amine with a $C_1$ to $C_4$ monocarboxylate of a metal from Group I, IIa, VIa, VIIa or VIII in an aqueous medium and to the use thereof as fungicidal compositions. The compositions can be water-based and are therefore particularly suitable for use as wood preservatives. These compositions are substantially less toxic than the conventionally used copper-chromium-arsenic systems and therefore have potential for wider use as fungicides.

1

## METAL AMINE CARBOXYLATES AND THE USE THEREOF AS PRESERVATIVES

The present invention relates to compositions containing metal amine complexes of carboxylic acids and a method of preparing such compositions.

Copper salts have long been used in fungicidal compositions. Furthermore, the toxicity of soluble copper salts is also well recognised.  Whilst it is possible to produce solid copper compounds of moderate and acceptable toxicity levels, the use of such solid compounds even in very fine form is limited to a considerable extent due to the difficulties in applying such solids uniformly on a substrate surface to achieve maximum surface cover for effective protection per unit weight of the compound.  Even in cases where such copper compounds have been produced in soluble form, such solutions have been very dilute solutions containing more than 60% by weight of the solvent for about 2% of effective copper content.

Compositions such as cuprammonium carboxylates have been claimed and described in US Patent Nos:  3900504 and 4020180.  Such solutions present a different kind of problem, i.e. that of bulk handling which makes them commercially unacceptable and furthermore the limited solubility of these complexes generates additional problems due to precipitation and sedimentation in the containers used for transportation.  In commercial operations, such precipitation can also lead to blockages in pumping and spraying equipment.

It has now been found that these problems of solubility may be mitigated by using metal amine carboxylates.

Accordingly, the present invention is a preservative composition comprising at least one metal amine monocarboxylate, wherein the metal ion is derived from a metal selected from Groups I, IIa, VIa, VIIa and VIII of the Periodic Classification due to Mendeleef, the amine group is derived from a $C_1$-$C_{20}$ amine and the monocarboxylate ion is derived from a $C_1$-$C_4$ monocarboxylic acid.

According to a further embodiment, the present invention is a process for preparing a composition comprising metal amine carboxylates of a metal selected from Groups I, IIa, VIa, VIIa and VIII of the Periodic Classification due to Mendeleef, said process comprising reacting a $C_1$-$C_{20}$ amine with a $C_1$-$C_4$ monocarboxylate of the metal in an aqueous medium.

The $C_1$-$C_{20}$ amine may be a primary, secondary or tertiary, saturated or unsaturated, alkyl substituted or unsubstituted, aliphatic, cycloaliphatic or aromatic, mono-, di- or polyamine. Examples of amines that may be used include mono- basic amines, diamines and alkanolamines. The alkyl substituted amines may optionally carry halogen or sulphur atoms in their substituent alkyl group. Specifically, ethylene diamine, ethanolamine and triethanolamine are preferred.

The monocarboxylic acid moieties in the metal amine carboxylates may be derived from saturated or unsaturated monocarboxylic acids. Examples of such acids include formic acid; acetic acid, propionic acid, the isomeric butyric acids, acrylic acid and methacrylic acid.

The metal in the metal carboxylate is preferably selected from lithium, sodium, potassium, rubidium, caesium, silver, copper, beryllium, magnesium, calcium, chromium, manganese, iron, cobalt, nickel, rhodium and platinum, copper carboxylates being most preferred.

The reaction is suitably carried out using a molar excess of the amine in relation to the metal carboxylate. Thus, it is preferable to react at least 1 mole of the amine with between 0.2 and 1 mole of the metal carboxylate.

The reaction is carried out in an aqueous medium. The aqueous medium may be ammoniacal or aqueous alcoholic depending upon the type of amine and metal carboxylate reactants. The reaction is suitably carried out at a temperature of between 10 and 50°C and at atmospheric pressure.

The solid metal amine carboxylates may either separate from the reaction mixture or, if in solution, may be recovered by conventinal drying techniques.

The compositions of the present invention possess fungicidal activity. These compositions therefore find several uses, for example as paint biocides, as wood preservatives, as fungicides to prevent mildew on fabrics and to counteract growth of algae and marine fouling. Particularly, these compositions inhibit the growth of fungi such as <u>Cladosporium herbarum</u> which are responsible for the spoilage of paints, and <u>Coniophora cerebella</u> which causes wood decay.

For any of the above uses, the compositions may be used as such or in the form of their solution in water or oil. The solutions may however contain other conventional additives capable of supplementing their activity such as free formic acid, propionic acid, boric acid derivatives, formalin and bisulphites. The aqueous solutions may additionally contain wetting, spreading or sticking agents or may be emulsified with mineral oils where necessary.

The concentration of the metal amine carboxylate applied to a substrate will depend not only upon the substrate and its end use and the metal forming the metal amine carboxylate but also on the nature of the attack to be treated or prevented. These can however be easily ascertained by those skilled in the art. For example, for the preservation of wood, treatment rate equivalent to concentrations of metal in the range 0.4 to 1.0% may be used.

The metal amine carboxylates of the present invention have greater solubility in water than the conventional metal salts such as copper formate, copper propionate and cuprammonium carboxylates. Their improved solubility allows a freer flow and more even spread of the composition onto the substrate, particularly when used as sprays.

The invention is further illustrated with reference to the following Examples.

Example 1

<u>Copper ethylene diamine acetate (CEDA)</u>

(a) <u>Preparation of CEDA solution</u>

| | | |
|---|---|---|
| Ethylene diamine | 1.4 | mol |
| Copper acetate hydrate | 1.0 | mol |
| Water | 14.15 | mol |

The reaction between ethylene diamine and copper acetate was exothermic and the heat generated was sufficient to complete the chemical reaction. At the start of the reaction a small quantity of water viz 1.5 mols was added and the remainder added during the reaction as required.

The solubility of copper acetate hydrate, in cold water, is 6.72% by weight, producing a solution containing 2.14% by weight of copper. The copper content of CEDA solution is 10.75 by weight of copper.

(b)  Preparation of CEDA solid

| | | |
|---|---|---|
| Ethylene diamine | 1.4 | mol |
| Copper acetate hydrate | 1.0 | mol |
| Water | 2.8 | mol |

The above recipe, when prepared as described above in paragraph (a), and dried, produced a stable blue solid containing 22.4% by weight of copper. The solid was soluble in an equal weight of water.

Example 2

Copper ethanolamine formate  (CEF)

| | | |
|---|---|---|
| Copper formate | 1.0 | mol |
| Ethanolamine | 2.5 | mol |
| Water | 4.0 | mol |

The copper formate was slowly added, with stirring, to the ethanolamine and water. The solution contained 16.9% by weight of copper compared to 4.6% by weight of copper in a saturated copper formate solution.

Example 3

Copper triethanolamine acetate  (CTEA)

| | | |
|---|---|---|
| Copper acetate hydrate | 1.0 | mol |
| Triethanolamine | 2.0 | mol |
| Water | 22.0 | mol |

The carboxylate was prepared as described in Example 2.

The copper content of the solution was 7.05% by weight. A saturated solution of copper acetate hydrate at room temperature contains 2.14% w/w of copper.

The metal amine carboxylates have the following handling and manufacturing advantages when compared to conventional copper salts, e.g. copper ammonium complexes:

(i)     they are easier to manufacture, because amines are less volatile than ammonia,

(ii)    they have greater water solubility, and do not require the addition of extra ammonia to improve solubility, (iii)   they have no unpleasant ammoniacal smell,

(iv)    they have higher metal content, especially as the solutions will not require the addition of ammonia for diluting with water.

It is preferable to store the metal amine carboxylates away from sunlight or in dark containers, because they have a tendency to release their metal when exposed to light.

Claims:

1. A preservative composition comprising at least one metal amine monocarboxylate, wherein the metal ion is derived from a metal selected from Groups I, IIa, VIa, VIIa and VIII of the Periodic Classification due to Mendeleef, the amine group is derived from a $C_1$-$C_{20}$ amine and the monocarboxylate ion is derived from a $C_1$-$C_4$ monocarboxylic acid.

2. A composition according to claim 1 wherein the amine is selected from ethylene diamine, ethanolamine and triethanolamine.

3. A composition according to claim 1 or 2 wherein the monocarboxylate ion is derived from an acid selected from formic acid, acetic acid, propionic acid, the isomeric butyric acids, acrylic acid and methacrylic acid.

4. A composition according to any one of the preceding claims wherein the metal ion in the metal carboxylate is derived from lithium, sodium, potassium, rubidium, caesium, silver, copper, beryllium, magnesium, calcium, chromium, manganese, iron, cobalt, nickel, rhodium and platinum.

5. A preservative composition comprising copper ethylene diamine acetate, copper ethanolamine formate or copper triethanolamine acetate.

6. A process for preparing metal amine monocarboxylates as claimed in any one of the preceding claims said process comprising reacting a $C_1$-$C_{20}$ amine with a metal monocarboxylate derived from a metal selected from Groups I, IIa, VIa, VIIa and VIII of the Periodic Classification due to Mendeleef, and $C_1$-$C_4$ monocarboxylic acid, in an aqueous medium.

7. A process for preparing metal amine monocarboxylates according to claim 6 comprising reacting at least 1 mole of the amine with between 0.2 and 1 mole of the metal carboxylate in an aqueous medium.

8. A process according to claim 6 or 7 wherein the amine and the metal carboxylate is reacted at a temperature between 10 and 50°C and at atmospheric pressure.

9.  A preservative composition as claimed in any one of the preceding claims 1-5 wherein said composition is used as a fungicide to prevent mildew on fabrics, growth of algae and marine fouling.

10. A preservative composition as claimed in any one of the preceding claims 1-5 wherein said composition is used as a wood preservative.

| Category | Citation of document with indication, where appropriate, of relevant passages | Relevant to claim | CLASSIFICATION OF THE APPLICATION (Int. Cl.³) |
|---|---|---|---|
| | **DOCUMENTS CONSIDERED TO BE RELEVANT** | | |
| X | FR - A - 2 255 849 (A. KOHN) <br><br> * claims 1-4; page 2, lines 1-18; page 4, lines 32-35; page 7, example 3 * <br><br> -- | 1-10 | A 01 N 33/04 <br> 33/08 <br> 37/02 <br> 37/06 <br> B 27 K 3/36 <br> C 09 D 5/14 |
| X | FR - A - 1 519 553 (J. DAUDIN et al.) <br><br> * claims * <br><br> -- | 1,3,4, 6-10 | |
| X | FR - A - 1 301 904 (LA QUINOLEINE) <br><br> * claims; page 1, right-hand column, paragraph 2 * <br><br> -- | 1,3,4, 6-10 | **TECHNICAL FIELDS SEARCHED (Int. Cl.³)** <br><br> A 01 N 33/04 <br> 33/08 <br> 37/02 |
| X | US - A - 3 930 834 (D.T. SCHULTEIS et al.) <br><br> * claim 1; example 1 * <br><br> -- | 1-9 | |
| X | US - A - 2 924 551 (J. HARWOOD et al.) <br><br> * claims; column 2, lines 42-45; column 4, example 3 * <br><br> -- | 1,3,4, 6-10 | **CATEGORY OF CITED DOCUMENTS** <br><br> X: particularly relevant <br> A: technological background <br> O: non-written disclosure <br> P: intermediate document |
| X | US - A - 2 878 155 (G.A. CRUICK-SHANK) <br><br> * claims * <br><br> -- <br><br> ./. | 1,3,4, 6-10 | T: theory or principle underlying the invention <br> E: conflicting application <br> D: document cited in the application <br> L: citation for other reasons |

| | | |
|---|---|---|
| The present search report has been drawn up for all claims | | &: member of the same patent family, corresponding document |
| **Place of search** <br> The Hague | **Date of completion of the search** <br> 14-08-1981 | **Examiner** <br> DECORTE |

EPO Form 1503.1   06.78

## European Patent Office

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 2 734 028 (B. DOMOGALLA)<br><br>* claims *<br><br>-- | 1-10 | |
| X | US - A - 2 686 798 (G.T. GMITTER)<br><br>* claims *<br><br>-- | 1,3,4,<br>6-10 | |
| X | DE - C - 1 154 111 (ESSO)<br><br>* claim *<br><br>------- | 1,3,4,<br>6-10 | TECHNICAL FIELDS SEARCHED (Int. Cl.³) |

EPO Form 1503.2   06.78